(19) Europäisches Patentamt

European Patent Office

Office européen des brevets

(11) **EP 1 029 830 A1**

(12) **EUROPÄISCHE PATENTANMELDUNG**

(43) Veröffentlichungstag:
23.08.2000 Patentblatt 2000/34

(51) Int. Cl.[7]: **C03C 10/12**

(21) Anmeldenummer: 00100705.3

(22) Anmeldetag: **14.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.02.1999 DE 19907038**

(71) Anmelder:
• **Schott Glas**
**55122 Mainz (DE)**
Benannte Vertragsstaaten:
**BE CH DE DK ES FI FR GR IE IT LI LU MC NL PT SE AT CY**

• **CARL-ZEISS-STIFTUNG**
**trading as SCHOTT GLAS**
**55122 Mainz (DE)**
Benannte Vertragsstaaten:
**GB**

(72) Erfinder:
• **Mitra, Ina, Dr.**
**55271 Stadecken-Elsheim (DE)**
• **Siebers, Friedrich, Dr.**
**55283 Nierstein (DE)**
• **Schönberger, Klaus**
**55127 Mainz (DE)**
• **Rüdinger, Bernd, Dr.**
**55126 Mainz (DE)**
• **Schultheis, Bernd**
**55270 Schwabenheim (DE)**

(54) **Transluzente oder opake Glaskeramik mit Hochquarz-Mischkristallen als vorherrschender Kristallphase und deren Verwendung**

(57) Es wird eine transluzente oder opake Glaskeramik mit Hochquarz-Mischkristallen als vorherrschender Kristallphase mit einer Zusammensetzung (in Gew.-%) von $Li_2O$ 3-5, $Na_2O$ 0-1, $K_2O$ 0-1, $Na_2O + K_2O$ 0,2-2, MgO 0-1,8, BaO 0-3,5, SrO 0-1, CaO 0-1, BaO+SrO+CaO 0,2-4, ZnO 0-2,8, $Al_2O_3$ 17-26, $SiO_2$ 62-72, TiO2 0-2,5, $ZrO_2$ 0-3, $TiO_2 + ZrO_2$ 1-<3,5, $Sb_2O_3$ 0-2, $As_2O_3$ 0-2, SnO 0-<1, $P_2O_5$ 0-8 einem mittleren thermischen Längenausdehnungskoeffizienten $\alpha_{20-700°C}$ von $< 0,5 \cdot 10^{-6}$/K, einer mittleren Kristallgröße der Hochquarz-Mischkristalle von $\geq$ 80 nm und einer Transmission (Probedicke 4 mm) $\tau_{380-780}$ < 30 % beschrieben. Die Glaskeramik wird bevorzugt als beheizbare Platte zum Kochen und Grillen, als Kochgeschirr, als Kaminscheibe und als Bodenplatte für Mikrowellenherde verwendet.

EP 1 029 830 A1

**Beschreibung**

Die Erfindung hat eine transluzente oder opake Glaskeramik mit Hochquarz-Mischkristallen als vorherrschender Kristallphase und deren Verwendung zum Gegenstand.

Glaskeramiken mit Hochquarz-Mischkristallen als vorherrschender Kristallphase sind bekannt.

So beschreibt das US Patent 4,461,839 transparente, transluzente und opake Glaskeramiken aus den System $Li_2O$-$Al_2O_3$-$SiO_2$ (sogenannte LAS-Glaskeramiken) mit Hochquarz-Mischkristallen als vorherrschender Kristallphase, wobei die Glaskeramiken Eigenfarben von schwarz über braun bis rot aufweisen. Deren optische Erscheinung wurde jedoch rein visuell beurteilt.

Beheizbare Platten aus Glaskeramik, die als Kochflächen verwendet werden sollen, müssen in Abhängigkeit vom verwendeten Heizsystem Temperaturbeaufschlagungen deutlich über 300°C, gegebenenfalls über 500°C, standhalten. Zur Überprüfung, ob eine Glaskeramik für die Verwendung z.B. als Kochfläche geeignet ist, hat sich daher u.a. die Bestimmung des linearen thermischen Ausdehnungskoeffizient für den Temperaturbereich von 20°C bis 700°C, $\alpha_{20-700°C}$, etabliert. Grundsätzlich sind Glaskeramiken mit einem Ausdehnungskoeffizient $\alpha_{20-700°C} \sim 1 \cdot 10^{-6}$/K zwar als Kochfläche geeignet, für den heutigen Standard an Heizsystemen und Temperaturen in der Größenordnung über 500°C im Bereich der Kochzonen (neben den Bereichen nahe Raumtemperatur) steigt die Anforderung an niedrige thermische Ausdehnung auf einen Ausdehnungskoeffizient $\alpha_{20-700°C} < 0,5 \cdot 10^{-6}$/K, idealerweise sogar $\alpha_{20-700°C} < 0,38 \cdot 10^{-6}$/K, an, um akzeptable Raten in der Bruchausfallwahrscheinlichkeit zu erreichen. Negative thermischen Ausdehnungskoeffizienten werden in größerem Maße zugelassen als leicht positive, da in diesem Fall eine Glaskeramik unter Druckspannung gesetzt wird.

Es ist allgemein bekannt, daß mit Glaskeramiken aus dem System $Li_2O$-$Al_2O_3$-$SiO_2$ diese niedrige Ausdehnung eingestellt werden kann, was in unterschiedlichen Gebieten, z.B. Spiegelträger für Teleskope, Kochgeschirr und -flächen, seit Jahrzehnten technisch verbreitet ist.

Bei diesen Glaskeramiken können die Hauptkristallphasen Hochquarzmischkristall (HQMK), auch β-Eukryptit-Mischkristall genannt, und Keatitmischkristall (KMK), auch als β-Spodumen-Mischkristall bezeichnet, unterschieden werden.

So zeigen die HQMK-LAS-Glaskeramiken eine geringere thermische Ausdehnung als KMK-Glaskeramiken, deren lineare thermische Ausdehnungskoeffizienten in der Größenordnung von $\alpha_{20-700°C} \sim 1 \cdot 10^{-6}$/K liegen. Dementsprechend wird die Hauptkristallphase Hochquarzmischkristall für Anwendungen die eine sehr geringe Ausdehnung benötigen, z. B. Kochflächen, in der jüngeren Zeit gegenüber Keatitmischkristall bevorzugt.

Zur Kristallkeimbildung werden üblicherweise $TiO_2$ und/oder $ZrO_2$ verwendet.

So ist beispielsweise aus der EP 0 220 333 B1 eine durchsichtige farbige Glaskeramik mit Hochquarz-Mischkristallen als vorherrschender Kristallphase bekannt, wobei die Transparenz im sichtbaren Bereich im wesentlichen durch Zugabe der Keimbildner mit einem Anteil von 1,5 - 5,0 Gew.-% $TiO_2$ und 0 - 3,0 Gew.-% $ZrO_2$, sowie der Gesamtmenge an $TiO_2$ und $ZrO_2$ von 3,5 bis 5,5 Gew.-% eingestellt wird.

Aus der DE 43 21 373 C2 sind ebenfalls Glaskeramiken mit Hochquarz-Mischkristallen als vorherrschender Kristallphase bekannt. Dabei handelt es sich um Glaskeramiken mit hoher Transmission, besonders im Wellenlängenbereich von 2700 bis 3300 nm, aber auch einer hohen Transmission im sichtbaren Bereich. Um die besonders bei der Verwendung der Glaskeramik als Kochfläche störende hohe Transmission im sichtbaren Bereich zu verringern, werden der Glaskeramik färbende Komponenten zugesetzt. Glaskeramiken ohne färbende Zusätze weisen eine unverändert hohe Transmission im sichtbaren Bereich auf.

Es ist Aufgabe der Erfindung eine transluzente oder opake Glaskeramik mit Hochquarz-Mischkristallen als vorherrschender Kristallphase zu finden, die eine niedrige thermische Ausdehnung, eine im sichtbaren Bereich geringe Transmission, auch ohne Zusatz von färbenden Komponenten, und eine hohe Temperatur- und Temperaturwechselbeständigkeit aufweist. Ferner soll die Glaskeramik zusätzlich einfärbbar sein und sich besonders zur Verwendung als Kochplatte, Kochgeschirr oder Kaminscheibe eignen.

Die Aufgabe durch eine Glaskeramik nach Anspruch 1 gelöst, wobei die Glaskeramik eine Zusammensetzung (in Gew.-%) $Li_2O$ 3 - 5, $Na_2O$ 0 - 1, $K_2O$ 0 - 1, $Na_2O$ + $K_2O$ 0,2 - 2, MgO 0 - 1,8, BaO 0 - 3,5, SrO 0 - 1, CaO 0 - 1, BaO+SrO+CaO 0,2 - 4, ZnO 0 - 2,8, $Al_2O_3$ 17 - 26, $SiO_2$ 62 - 72, $TiO_2$ 0 - 2,5, $ZrO_2$ 0 - 3, $TiO_2$ + $ZrO_2$ 1 - < 3,5, $Sb_2O_3$ 0 - 2, $As_2O_3$ 0 - 2, SnO 0 - < 1, $P_2O_5$ 0 - 8, einen mittleren thermischen Längenausdehnungskoeffizienten $\alpha_{20-700°C}$ von < 0,5 $\cdot 10^{-6}$/K, einer mittlere Kristallgröße der Hochquarz-Mischkristalle von $\geq$ 80 nm und eine Transmission (Probedicke 4 mm) $\tau_{380-780\,nm}$ < 30 % aufweist.

Insgesamt ist es nun möglich eine transluzente oder opake Glaskeramik mit Hochquarz-Mischkristallen als vorherrschender Kristallphase zu erhalten, die eine vorteilhafte geringe Transmission im sichtbaren Bereich aufweist, wobei die geringe Transmission ohne einen Zusatz an färbenden Komponenten erreicht wird. Außerdem weist die Glaskeramik eine vorteilhafte niedrige thermische Ausdehnung auf.

Dadurch, daß der Gesamtgehalt an $TiO_2$ und $ZrO_2$ im Bereich von 1 bis < 3,5 Gew.-% beschränkt wird, werden, im Vergleich zu bekannten LAS-Glaskeramiken, wenige Keimbildner zur Verfügung gestellt. Die geringe Anzahl an Keimbildnern trägt dazu bei, daß sich während der Keramisierung der Glaskeramik wenige dafür aber große Hochquarz-Mischkristalle bilden. Die Mischkristalle wachsen dabei bis zu einer mittleren Größe von über 80 nm heran. Bei einer höheren Kristallkeimdichte bilden sich viele kleine Kristalle aus, so daß aufgrund der resultierenden geringen Kristallgröße die Glaskeramik transparent erscheint.

Die geringere Keimdichte kann nicht nur durch einen geringeren Keimbildnergehalt, sondern auch durch Prozeßvariationen, insbesondere z.B. durch Verkürzung der Keimbildungszeit, eingestellt werden.

Ein weiterer Vorteil dieser Erfindung ist der relativ niedrige $TiO_2$-Gehalt. Aus der Fachliteratur ist bekannt, daß ein Ti-Fe-Komplex leicht färbend wirkt. Ist diese leichte Färbung z.B. bei transparenten, weiß-transluzenten oder weißopaken Glaskeramiken unerwünscht, so ist der Einsatz von reinen, insbesondere Fe-armen Rohstoffen erforderlich. Ist nun die Komponente $TiO_2$ in geringerem Umfang Bestandteil der Glaskeramik, so kann auf die teuren Fe-armen Rohstoffe verzichtet werden.

Wird der $ZrO_2$-Gehalt über 3 Gew.-% gewählt, so treten Schwierigkeiten beim Einschmelzen auf.

Zur Läuterung des Glases werden übliche Läutermittel wie z.B. $As_2O_3$, $Sb_2O_3$, $SnO_2$, $CeO_2$, Fluoride, Chloride verwendet.

Über die Wahl der Rohstoffe und die Fahrweise des Fertigungsaggrgates (s. DE 43 21 373 C2) läßt sich der $H_2O$-Gehalt in der Größenordnung von 0,01 - 0,05 mol/l einstellen.

Die erfindungsgemäße Glaskeramik weist bevorzugt einen Helligkeitswert L* im L*a*b* Farbsystem (CIELAB-System) von > 85 auf. Die Glaskeramik weist also überwiegend helle Weißtöne auf.

Im wesentlichen ist die gewünschte Transluzenz oder Opazität, die geringe Transmission im sichtbaren Bereich sowie der hohe Helligkeitswert - neben der Zusammensetzung - über den Gehalt an Keimbildnern, also $ZrO_2$ und $TiO_2$, sowie über die mittlere Größe der Hochquarz-Mischkristalle einstell- und regelbar.

Um eine ausreichende Schmelzbarkeit zu gewährleisten sind zumindest 0,2 Gew.-% der nicht-kristallbildenden Alkalioxide $Na_2O$ und/oder $K_2O$ enthalten. Um einen Restglasanteil in der Glaskeramik zu erhalten, in dem Keramisierungsspannungen abgebaut werden können, sind mindestens 0,2 Gew.-% der nicht-kristallbildenden Erdalkalioxide BaO, SrO und/oder CaO enthalten.

Die Summen der jeweils nicht-kristallbildenden Alkali- bzw. Erdalkalioxide wird auf 2 bzw. 4 Gew.-% begrenzt, da die Restglasphase für die Erhöhung des thermischen Ausdehnungskoeffizienten des glaskeramischen Produktes verantwortlich ist.

Die Komponenten $Li_2O$, $Al_2O_3$, $SiO_2$ und in geringerem Maße MgO und ZnO bilden den Hochquarzmischkristall.

$Li_2O$-Gehalte von über 5 Gew.-% führen beim Herstellprozeß zur ungewollten, voreilenden Kristallisation. Ähnliche Wirkung zeigen hohe MgO-Gehalte.

Zur Vermeidung erhöhter Ausdehnungskoeffizienten der Glaskeramik wird der Gehalt von MgO auf 1,8 Gew.-% und der Gehalt von ZnO auf 2,8 Gew.-% begrenzt.

$Al_2O_3$-Gehalte über 25 Gew.-% erhöhen die Viskosität des Glases erheblich und verstärken die Neigung zur unerwünschten Mullitkristallisation.

Höhere $SiO_2$- Gehalte als 72 Gew.-% erhöhen die benötigten Einschmelztemperaturen unzulässig.

Bevorzugt weist die erfindungsgemäße Glaskeramik eine Zusammensetzung (in Gew.-%) von: $Li_2O$ 3,2 - 4,8, $Na_2O$ 0 - 1, $K_2O$ 0 - 1, $Na_2O$ + $K_2O$ 0,2 - 2, MgO 0,1 -1,5, BaO 0 - 3,0, SrO 0-1, CaO 0-1, BaO+SrO+CaO 0,2 - 4, ZnO 0,2 - 2, $Al_2O_3$ 18 - 24, $SiO_2$ 63 - 70, $TiO_2$ 0 -< 2, $ZrO_2$ 0- 2,5, $TiO_2$ + $ZrO_2$ 1 - 3,3, $Sb_2O_3$ 0 -2, $As_2O_3$ 0 -2, SnO 0 -< 1, $P_2O_5$ 0 - 8, einen mittleren thermischen Längenausdehnungskoeffizienten $\alpha_{20 - 700°}$ von < 0,4 $\cdot 10^{-6}$/K, eine mittlere Kristallgröße der Hochquarz-Mischkristalle von $\geq$ 85 nm und eine Transmission (Probedicke 4 mm) $\tau_{380 - 780\,nm}$ < 30 % auf.

Und besonders bevorzugt weist die erfindungsgemäße Glaskeramik eine Zusammensetzung (in Gew.-%) von $Li_2O$ 3,5 - 4,5, $Na_2O$ 0 - 1, $K_2O$ 0 - 1, $Na_2O$ + $K_2O$ 0,2 - 2, MgO 0,1 -1,5, BaO 0 -< 3, SrO 0 - 1, CaO 0 - 1, BaO+SrO+CaO 0,2 - 4, ZnO 0,2 -< 2, $Al_2O_3$ 18 - 22, $SiO_2$ 64 - 68, $TiO_2$ 0 -< 1,8, $ZrO_2$ 0 - 2,2, $TiO_2$ + $ZrO_2$ 1 - 3,2, $Sb_2O_3$ 0 - 2, $As_2O_3$ 0 - 2, SnO 0 -< 1, einen mittleren thermischen Längenausdehnungskoeffizienten von < 0,38 $\cdot 10^{-6}$/K, eine mittlere Kristallgröße der Hochquarz-Mischkristalle von $\geq$ 90 nm und eine Transmission (Probedicke 4 mm) $\tau_{380 - 780\,nm}$ < 30 % auf.

Die Glaskeramik kann zusätzlich wenigstens eine färbende Komponente, insbesondere CoO, $Cr_2O_3$, $CeO_2$, CuO, $Fe_2O_3$, MnO, NiO und/oder $V_2O_5$ sowie gegebenenfalls weitere färbende Verbindungen enthalten. Aufgrund der genannten Eigenschaften der Glaskeramik, insbesondere des hohen Helligkeitswertes L* erhält man durch Zusatz von färbenden Komponenten besonders reine Farbtöne.

Die Glaskeramik wird bevorzugt unterhalb 950°C keramisiert. Oberhalb 950°C erfolgt die Bildung bzw. Umwandlung in eine Glaskeramik mit Keatitmischkristallen als vorherrschender Kristallphase, wobei dies mit einem unerwünschten Anstieg der thermischen Ausdehnung verbunden ist.

Die Umwandlung des glasigen Ausgangsmaterials in eine Glaskeramik soll außerdem aus wirtschaftlichen Gründen unterhalb von 950 °C erfolgen.

Vorzugsweise findet die erfindungsgemäße Glaskeramik Verwendung als beheizbare Platte zum Kochen und Grillen, als Kochgeschirr, als Kaminscheibe und als Bodenplatte für Mirkowellenherde.

Die folgenden Beispiele verdeutlichen die Erfindung.

Tabelle 1 zeigt Zusammensetzungen und einige Eigenschaften von Glaskeramiken, wobei es sich bei Beispiel 1 und 2 um eine erfindungsgemäße Glaskeramik und bei Beispiel 3 um eine Glaskeramik handelt, deren Gehalt an $TiO_2$ und Gesamtgehalt an den Keimbildnern $TiO_2$ und $ZrO_2$ außerhalb der Erfindung liegt.

Ebenfalls in Tabelle t ist die Buntheit C*

$$(C^* = \sqrt{(a^*)^2 + (b^*)^2})$$

im L*C*h* Farbsystem angegeben. Vorzugsweise ist die Buntheit der erfindungsgemäßen Glaskeramiken C* < 5.

Die Ausgangsgläser wurden unter Verwendung von in der Glasindustrie üblichen Rohstoffen bei Temperaturen von ca. 1620°C erschmolzen und geläutert. Die Formgebung findet nach den üblichen Verfahren z.B. Gießen oder Walzen statt. Gußstücke von ca. 140 x 140 x 20 mm Größe wurden beginnend ab ca. 660°C in einem Kühlofen auf Raumtemperatur abgekühlt.

Zur Umwandlung (1a) in eine Glaskeramik wurden die Glaskeramikausgangsgläser mit ca. 5 K/min auf 740°C aufgeheizt, bei dieser Temperatur 1 h gehalten, anschließend mit ca. 2,5 K/min auf 890°C aufgeheizt und ca. ¼ h gehalten. Die Abkühlung erfolgte durch Abschalten der Ofenheizung.

Je nach gewählter Zusammensetzung muß das Umwandlungsprogramm im Temperatur/Zeit-Profil angepaßt werden, insgesamt dauert der Umwandlungsprozeß deutlich weniger als 18h.

Bei Umwandlung 1b wurde die Keimbildungszeit auf ca. ¼ h verkürzt. Dieses Umwandlungsprogramm benötigte weniger als 6 h.

Dadurch, daß die verbleibende Restglasphase in der Größenordnung 5-15% den Spannungsabbau in der Probe sicherstellt, werden Verwerfungen bei der Keramisierung verhindert.

Nach der Umwandlung 1a zeigt Beispiel 3 mit 2,6 Gew.-% $TiO_2$, das eine typische Zusammensetzung von üblichen, transparenten HQMK-Glaskeramiken wiedergibt, eine hohe Transparenz. Zur Einstellung der gewünschten Transluzenz ist eine zweite Umwandlung (2) erforderlich, die in diesem Beispiel bei 940°C mit einer Haltezeit von 2 h erfolgte (Umwandlung 2). Diese Probe ist danach bereits in eine KMK-Glaskeramik umgewandelt, die eine thermische Ausdehnung $\alpha_{20-700°C}$ deutlich über $0,5 \cdot 10^{-6}$/K aufweist.

An den keramisierten Proben fand u.a. eine Messung der thermischen Ausdehnung an 100 mm langen Stäbchen und der Transmission an 4 mm dicken, beidseitig polierten Proben statt. Die Probe wird direkt am Eingang einer 60 mm Integrationskugel positioniert. Die Angabe des Lichttransmissionsgrades $\tau_{VIS}$ (380-780nm) erfolgt nach DIN 5033.

Die Hauptkristallphase und die mittlere Kristallitgröße wurden mittels Röntgenbeugungsdiffraktometrie bestimmt.

Tabelle 1

| Zusammensetzung und Eigenschaften von erfindungsgemäßen Glaskeramiken (Beispiel 1 und 2) sowie einer Vergleichsglaskeramik (Beispiel 3) | | | |
|---|---|---|---|
| Oxide [Gew.%] | Beispiel 1 | Beispiel 2 | Beispiel 3 |
| $SiO_2$ | 67,3 | 65,45 | 67 |
| $Al_2O_3$ | 20,2 | 21,6 | 20,2 |
| $Li_2O$ | 4,1 | 3,7 | 4,0 |
| $Na_2O$ | 0,5 | 0,5 | 0,5 |
| BaO | 0,8 | 2,0 | 0,8 |
| MgO | 0,7 | 0,5 | 0,5 |
| ZnO | 1,7 | 1,75 | 1,6 |
| $TiO_2$ | 1,0 | 1,0 | 2,6 |
| $ZrO_2$ | 1,7 | 1,75 | 1,7 |
| $As_2O_3$ | 1,9 | 1,85 | 1,2 |
|  |  |  |  |
| Umwandlung 1a |  |  |  |
| $\tau_{VIS}$ [%], 4mm | 7 |  | 86,5 |
| $\alpha_{20-700°C}$ [$*10^{-6}$/K] | -0,36 |  | -0,54 |
| Hauptkristallphase | HQMK |  | HQMK |
| mittlere Kristallgröße | ca. 110 nm |  | ca. 45 nm |
| L* | 93,2 |  | nicht bestimmt |
| C* | 4,2 |  | nicht bestimmt |
| Umwandlung 1b |  |  |  |
| $\tau_{VIS}$ [%], 4mm | 6 | 19 |  |
| $\alpha_{20-700°C}$ [$*10^{-6}$/K] | -0,36 | 0,06 |  |
| Hauptkristallphase | HQMK | HQMK |  |
| mittlere Kristallgröße | ca. 125 nm | ca. 120 nm |  |
| L* | 93,6 | nicht bestimmt |  |
| C* | 4,5 | nicht bestimmt |  |
| Umwandlung 2 | entfällt | entfällt |  |
| $\tau_{VIS}$ [%], 4mm |  |  | 14 |
| $\alpha_{20-700°C}$ [$*10^{-6}$/K] |  |  | 0,85 |
| Hauptkristallphase |  |  | KMK |
| L* |  |  | 79 |
| C* |  |  | 6,9 |

**Patentansprüche**

1. Transluzente oder opake Glaskeramik mit Hochquarz-Mischkristallen als vorherrschender Kristallphase mit einer Zusammensetzung (in Gew.-%) von:

| | |
|---|---|
| $Li_2O$ | 3 - 5 |
| $Na_2O$ | 0 - 1 |
| $K_2O$ | 0 - 1 |
| $Na_2O + K_2O$ | 0,2 - 2 |
| MgO | 0 - 1,8 |
| BaO | 0 - 3,5 |
| SrO | 0 - 1 |
| CaO | 0 - 1 |
| BaO+SrO+CaO | 0,2 - 4 |
| ZnO | 0 - 2,8 |
| $Al_2O_3$ | 17 - 26 |
| $SiO_2$ | 62 - 72 |
| $TiO_2$ | 0 - 2,5 |
| $ZrO_2$ | 0 - 3 |
| $TiO_2 + ZrO_2$ | 1,0 -< 3,5 |
| $Sb_2O_3$ | 0 - 2 |
| $As_2O_3$ | 0 - 2 |
| SnO | 0 -< 1 |
| $P_2O_5$ | 0 - 8 |

einem mittleren thermischen Längenausdehnungskoeffizienten $\alpha_{20 - 700°C}$ von < 0,5 $\cdot 10^{-6}$/K, einer mittleren Kristallgröße der Hochquarz-Mischkristalle von ≥ 80 nm und einer Transmission (Probedicke 4 mm) $\tau_{380 - 780 nm}$ < 30%.

2. Glaskeramik nach Anspruch 1,
   **gekennzeichnet durch,**
   eine Zusammensetzung (in Gew.-%) von:

| | |
|---|---|
| $Li_2O$ | 3,2 - 4,8 |
| $Na_2O$ | 0 - 1 |
| $K_2O$ | 0 - 1 |
| $Na_2O + K_2O$ | 0,2 - 2 |
| MgO | 0,1 - 1,8 |
| BaO | 0 - 3,0 |
| SrO | 0 - 1 |
| CaO | 0 - 1 |
| BaO+SrO+CaO | 0,2 - 4 |
| ZnO | 0,2 - 2 |
| $Al_2O_3$ | 18 - 24 |
| $SiO_2$ | 63 - 70 |
| $TiO_2$ | 0 -< 2 |
| $ZrO_2$ | 0 - 2,5 |
| $TiO_2 + ZrO_2$ | 1,0 - 3,3 |
| $Sb_2O_3$ | 0 - 2 |
| $As_2O_3$ | 0 - 2 |
| SnO | 0 -< 1 |
| $P_2O_5$ | 0 - 8, |

mit einem mittleren thermischen Längenausdehnungskoeffizienten $\alpha_{20 - 700°C}$ von < 0,4 $\cdot 10^{-6}$/K, einer mittleren Kristallgröße der Hochquarz-Mischkristalle von ≥ 85 nm und einer Transmission (Probedicke 4 mm) $\tau_{380 - 780 nm}$ < 30%.

3. Glaskeramik nach Anspruch 1 oder 2,
   **gekennzeichnet durch,**
   eine Zusammensetzung (in Gew.-%) von:

| | |
|---|---|
| $Li_2O$ | 3,5 - 4,5 |
| $Na_2O$ | 0 - 1 |

| | |
|---|---|
| $K_2O$ | 0 - 1 |
| $Na_2O + K_2O$ | 0,2 - 2 |
| MgO | 0,1 - 1,5 |
| BaO | 0 -< 3 |
| SrO | 0 - 1 |
| CaO | 0 - 1 |
| BaO+SrO+CaO | 0,2 - 4 |
| ZnO | 0,2 -< 2 |
| $Al_2O_3$ | 18 - 22 |
| $SiO_2$ | 64 - 68 |
| $TiO_2$ | 0 -< 1,8 |
| $ZrO_2$ | 0 - 2,2 |
| $TiO_2 + ZrO_2$ | 1,0 - 3,2 |
| $Sb_2O_3$ | 0 - 2 |
| $As_2O_3$ | 0 - 2 |
| SnO | 0 -< 1, |

mit einem mittleren thermischen Längenausdehnungskoeffizienten von $< 0,38 \cdot 10^{-6}$/K, einer mittleren Kristallgröße der Hochquarz-Mischkristalle von $\geq 90$ nm und einer Transmission (Probedicke 4 mm) $\tau_{380\text{ -}780\text{ nm}} < 30$ %.

4. Glaskeramik nach wenigstens einem der Ansprüche 1 bis 3,
**dadurch gekennzeichnet,**
daß die Glaskeramik einen Helligkeitswert L* im L*a*b* Farbsystem (CIELAB-System) von > 85 aufweist.

5. Glaskeramik nach wenigstens einem der Ansprüche 1 bis 4,
**dadurch gekennzeichnet,**
daß die Glaskeramik wenigstens eine färbende Komponente enthält.

6. Glaskeramik nach Anspruch 5,
**dadurch gekennzeichnet,**
daß die Glaskeramik CoO, $Cr_2O_3$, $CeO_2$, CuO, $Fe_2O_3$, MnO, NiO und /oder $V_2O_5$ enthält.

7. Glaskeramik nach wenigstens einem der Ansprüche 1 bis 6,
**dadurch gekennzeichnet,**
daß deren Keramisierung unterhalb von 950°C erfolgt.

8. Verwendung einer Glaskeramik nach den Ansprüchen 1 bis 7,
als beheizbare Platte zum Kochen und Grillen, als Kochgeschirr, als Kaminscheibe und als Bodenplatte für Mikrowellenherde.

EP 1 029 830 A1

EUROPÄISCHER RECHERCHENBERICHT

Europäisches
Patentamt

Nummer der Anmeldung

EP 00 10 0705

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | SCHIFFNER ULRICH ET AL: "NUCLEATION IN A PRECURSOR GLASS FOR A Li2O-Al2O3-SiO2 GLASS CERAMIC. PART 2. VARIATION OF THE NUCLEATING AGENT CONCENTRATIONS" GLASTECH BER 1987, Bd. 60, Nr. 7, 1987, Seiten 239-247, XP002138867 * Seite 239 - Seite 240; Abbildungen 9-11; Tabellen 1-3 * * Seite 244 * | 1-4,7 | C03C10/12 |
| X | EP 0 437 228 A (CORNING FRANCE) 17. Juli 1991 (1991-07-17) * Ansprüche; Beispiel 13 * | 1,2,4-8 | |
| D,A | DE 43 21 373 A (SCHOTT GLASWERKE) 5. Januar 1995 (1995-01-05) * Spalte 5, Zeile 31 - Zeile 46; Ansprüche; Beispiele * | 1-8 | |
| A | JP 09 188538 A (NIPPON ELECTRIC GLASS CO LTD) 22. Juli 1997 (1997-07-22) * Zusammenfassung; Beispiele * | 1-8 | RECHERCHIERTE SACHGEBIETE (Int.Cl.7) C03C |

Der vorliegende Recherchenbericht wurde für alle Patentansprüche erstellt

| Recherchenort | Abschlußdatum der Recherche | Prüfer |
|---|---|---|
| DEN HAAG | 26. Mai 2000 | Van Bommel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

8

ANHANG ZUM EUROPÄISCHEN RECHERCHENBERICHT
ÜBER DIE EUROPÄISCHE PATENTANMELDUNG NR.

EP 00 10 0705

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2000

| Im Recherchenbericht angeführtes Patentdokument | Datum der Veröffentlichung | Mitglied(er) der Patentfamilie | Datum der Veröffentlichung |
|---|---|---|---|
| EP 0437228 A | 17-07-1991 | FR 2657079 A | 19-07-1991 |
| | | BR 9100105 A | 22-10-1991 |
| | | CA 2031666 A | 13-07-1991 |
| | | DE 69105152 D | 22-12-1994 |
| | | DE 69105152 T | 18-05-1995 |
| | | ES 2067053 T | 16-03-1995 |
| | | HK 38095 A | 24-03-1995 |
| | | JP 4214046 A | 05-08-1992 |
| | | KR 160525 B | 16-11-1998 |
| | | SG 28295 G | 18-08-1995 |
| | | US 5070045 A | 03-12-1991 |
| DE 4321373 A | 05-01-1995 | FR 2709484 A | 10-03-1995 |
| | | GB 2279343 A,B | 04-01-1995 |
| | | JP 7172862 A | 11-07-1995 |
| | | US 5446008 A | 29-08-1995 |
| JP 9188538 A | 22-07-1997 | KEINE | |

Für nähere Einzelheiten zu diesem Anhang : siehe Amtsblatt des Europäischen Patentamts, Nr.12/82